# DEMANDE DE BREVET EUROPEEN

(11) **EP 1 454 843 A1**
(43) Date de publication de la demande: **08.09.2004**
(21) Numéro de dépôt: 03100527.5
(22) Date de dépôt: 04.03.2003
(51) Int. Cl.: B65D 81/32, B65D 85/73, B01F 3/04

(54) **Bouteille, kit et méthode pour la préparation d'une boisson aromatisée et pétillante**

(71) Demandeur: Acka Sprl, 1190 Bruxelles (BE)
(72) Inventeur: Wyckmans, Andy, 1190, Bruxelles (BE); Vincent, Luc, 1180, Bruxelles (BE)
(74) Mandataire: Van Straaten, Joop

(57) **Abrégé**

Bouteille pour la préparation in situ d'une boisson pétillante, incluant un corps de bouteille (1) que l'on fixe à un obturateur (2) incluant un réceptacle (7) dans lequel on introduit une cartouche (9) de gaz sous pression, un perforateur (13) de la cartouche et une pastille (14) d'un additif comestible hydrosoluble, que l'on interpose entre la cartouche et le corps de bouteille, la fixation de l'obturateur (2) au corps de bouteille (1) ayant pour effet de placer le perforateur (13) en regard de la cartouche (9) et pouvant, dans une variante d'exécution, perforer la cartouche ce qui provoque une expansion du gaz dans le réceptacle dont l'étanchéité est assurée par la pastille.

## Description

### Domaine de l'invention

L'invention se rapporte à la préparation des boissons pétillantes.

Elle concerne plus particulièrement une bouteille qui est spécialement adaptée pour permettre à un consommateur de préparer in situ dans celle-ci, une boisson pétillante, ladite bouteille incluant un corps de bouteille et un obturateur du corps de bouteille, ledit obturateur incluant un réceptacle qui contient un additif comestible hydrosoluble, une cartouche de gaz sous pression et un perforateur de la cartouche.

### État de la technique

Il est connu depuis longtemps de fabriquer des boissons pétillantes in situ dans des bouteilles au départ d'eau non pétillante et d'un additif comestible hydrosoluble.

Ainsi, dans le document US-A-2 073 273, on décrit une bouteille dont l'extrémité supérieure est adaptée pour recevoir un additif hydrosoluble, une cartouche de gaz sous pression et un perforateur de la cartouche. Pour fabriquer une boisson pétillante dans la bouteille, on remplit celle-ci avec de l'eau non pétillante, on fixe le réceptacle sur la bouteille pour l'obturer et on actionne le perforateur, ce qui a pour résultat de libérer le gaz de la cartouche qui propulse alors l'additif dans la bouteille et y génère une boisson pétillante.

La bouteille connue décrite dans le document précité présente plusieurs désavantages qui rendent son utilisation difficile et peu pratique. Sa construction est par ailleurs compliquée et coûteuse.

### Résumé de l'invention

L'invention a pour objectif de remédier aux inconvénients de la bouteille connue décrite plus haut, en fournissant une bouteille de conception nouvelle, qui permette de préparer des boissons pétillantes de façon simple et économique.

L'invention a notamment pour objectif de fournir une bouteille nouvelle, qui permette de fabriquer une boisson pétillante présentant des propriétés intrinsèques particulières, au départ d'eau non pétillante ou insuffisamment pétillante et d'un additif comestible mis en oeuvre à l'état solide.

Un autre objectif de l'invention consiste à fournir une bouteille dont la construction soit simple et n'implique qu'un nombre modéré d'éléments de conception simple.

L'invention à également pour objectif de fournir un kit d'obturation d'une telle bouteille, ainsi qu'un procédé pour la fabrication d'une bouteille qui permette la préparation de boissons pétillantes in situ au départ d'eau non pétillante ou insuffisamment pétillante.

Un objectif supplémentaire de l'invention consiste à fournir un procédé pour la préparation de boissons pétillantes in situ dans une bouteille, au départ d'eau non pétillante ou insuffisamment pétillante.

A cette fin, la bouteille selon l'invention est caractérisée en ce que l'additif comestible hydrosoluble est mis en oeuvre dans une pastille qui est interposée entre la cartouche et le corps de bouteille.

Dans la suite du présent mémoire, on entend désigner par boisson pétillante, une boisson qui, maintenue sous pression de gaz, contient une quantité de gaz supérieure à la solubilité dans les conditions normales de pression et de température, de telle façon que placée dans ces conditions normales, elle soit soumise à un bouillonnement.

L'additif comestible hydrosoluble est une substance qui, additionnée à de l'eau en une quantité substantielle et dissoute dans celle-ci, lui confère une ou plusieurs propriétés particulières, telles que par exemple, un arôme olfactif ou gustatif, une couleur, un apport alimentaire ou pharmaceutique, une propriété digestive, une propriété curative ou préventive d'une maladie, ou encore une propriété analeptique, antiseptique, analgésique, stimulante ou somnifère (liste non limitative). L'additif comestible doit se trouver dans la boisson en une quantité substantielle au moins suffisante pour que les propriétés qu'il confère à l'eau soient perceptibles par les organes des sens humains (principalement l'odorat, le goût ou la vue) ou exerce une action perceptible sur l'organisme humain, dans les conditions où on l'ingère, par exemple une action curative. Additif comestible signifie que l'additif respecte les prescriptions légales en matière de sécurité alimentaire, hygiénique, pharmaceutique ou médicale, lorsqu'il est utilisé en quantité substantielle normale pour atteindre l'objectif énoncé ci-dessus. Des exemples d'additifs comestibles hydrosolubles utilisables dans le cadre de l'invention incluent les sels hydrosolubles d'oligo-éléments, les extraits hydrosolubles de plantes aromatiques, les substances alimentaires hydrosolubles, les substances effervescentes et les substances pharmaceutiques hydrosolubles.

Le profil du corps de la bouteille n'est pas critique. Il est habituellement cylindrique ou prismatique, par exemple hexagonal ou octogonal, mais peut également avoir un autre profil. Le corps de bouteille peut être en verre, en métal (par exemple en aluminium) ou en une matière synthétique, par exemple en polychlorure de vinyle, en polyéthylène, en polypropylène ou en polyéthylène téréphtalate.

Par définition, l'obturateur a pour fonction d'obturer le corps de bouteille. Il doit être réalisé en une matière étanche et sa fixation au corps de bouteille doit être assurée de manière étanche. L'obturateur peut être réalisé dans la même matière que le corps de la bouteille ou dans une matière différente. Quelle que soit la matière dont est fait le corps de bouteille, l'obturateur est avantageusement réalisé par moulage d'une matière plastique ou par emboutissage d'un métal ou d'un alliage métallique, par exemple de l'aluminium. L'obturateur peut être fixé de manière inamovible au corps de bouteille, par exemple par soudage ou collage. On préfère toutefois, selon l'invention, que la fixation de l'obturateur au corps de bouteille soit amovible. Dans cette forme de réalisation de l'invention, la fixation de l'obturateur au corps de bouteille peut par exemple être obtenue par vissage ou par emboîtement. Un joint d'étanchéité, généralement un joint torique en une matière élastomère, est avantageusement interposé entre l'obturateur et le corps de bouteille.

L'obturateur du corps de bouteille est profilé de manière à former un réceptacle interne pour la réception d'une cartouche de gaz, d'un additif comestible hydrosoluble tel que défini plus haut et d'un perforateur de la cartouche de gaz. Le réceptacle est profilé de manière à communiquer avec le corps de bouteille. Il peut par exemple consister en une chambre cylindrique ou prismatique ou présentant tout autre profil compatible avec sa fonction.

La cartouche de gaz n'est pas critique, toute cartouche de gaz du commerce pouvant convenir, à condition que ses dimensions soient adaptées à celles du réceptacle. Elle peut être en métal ou en une matière plastique imperméable aux gaz. Le gaz de la cartouche doit être choisi parmi ceux qui sont peu solubles dans l'eau et qui ne réagissent pas avec celle-ci pour former des composés toxiques qui ne seraient pas tolérés par l'organisme humain. Le dioxyde de carbone convient généralement bien et constitue un gaz préféré dans le cadre de la présente invention. Le gaz est normalement contenu dans la cartouche en une quantité et sous une pression suffisantes pour générer une eau pétillante dans la bouteille, lorsque celle-ci est remplie d'une eau non pétillante ou d'une eau insuffisamment pétillante.

Le perforateur a pour fonction de perforer la cartouche de gaz de manière à libérer le gaz qu'elle contient. Les perforateurs des cartouches de gaz sont bien connus en technique et consistent généralement en des poinçons métalliques acérés. Un perforateur qui est bien adapté à la bouteille selon l'invention inclut un poinçon en forme d'ergot tubulaire à arête tranchante. Dans cette forme de réalisation de la bouteille selon l'invention, l'ergot tubulaire peut être par exemple cylindrique, tronconique ou pyramidal.

Conformément à l'invention, l'additif comestible hydrosoluble est mise en oeuvre dans une pastille et celle-ci est interposée entre la cartouche et le corps de bouteille de manière à obturer le réceptacle.

La forme de la pastille n'est pas critique. Par définition, elle est une plaque de faible épaisseur. Elle peut avoir tout profil compatible avec sa fonction dans le réceptacle, par exemple un profil circulaire, ovale ou polygonal (par exemple carré, hexagonal ou octogonal). Le profil circulaire est préféré. La pastille peut être obtenue par compactage d'une poudre de l'additif, par découpage dans une masse solide contenant ledit additif ou constituée au moins partiellement de celui-ci, ou par tout autre moyen adéquat. On préfère utiliser une pastille obtenue par pastillage ou compactage d'une poudre contenant l'additif. Dans cette forme de réalisation préférée de l'invention, on peut utiliser toute technique connue de fabrication de pastilles par compactage de poudres. La pastille peut inclure un seul additif comestible hydrosoluble conforme à la définition qui en a été donnée plus haut, ou un mélange de deux ou plusieurs tels additifs. En variante, la pastille peut contenir un liant, en plus de l'additif comestible hydrosoluble, le liant devant être hydrosoluble et sans impact sur la santé du consommateur.

Les dimensions de la pastille doivent être adaptées au profil et aux dimensions du réceptacle, de manière à former une cloison obturant au moins partiellement (de préférence totalement) celui-ci. La pastille doit en outre avoir une résistance mécanique suffisante pour résister à la pression du gaz qui est libéré dans le réceptacle après que la cartouche de gaz a été perforée.

Dans la bouteille selon l'invention, lorsque l'obturateur est fixé au corps de bouteille, la pastille est située entre la cartouche de gaz et le corps de bouteille, et le perforateur est positionné en regard de la cartouche de gaz.

Dans une première variante de l'invention, la pastille forme une cloison étanche du réceptacle et la fixation de l'obturateur sur le corps de bouteille a pour effet de mettre la cartouche de gaz au contact du perforateur qui perce alors la cartouche et libère le gaz. Celui-ci diffuse alors dans le réceptacle où il est retenu provisoirement prisonnier par la pastille. Lorsque le corps de bouteille est rempli d'eau, la pastille se dissout progressivement, sa résistance mécanique décroît et elle finit par se briser sous l'effet de la pression du gaz. Dès ce moment, le gaz s'échappe du réceptacle et se disperse dans l'eau. Il en résulte un brassage énergique de celle-ci, ce qui accélère la dissolution des résidus de la pastille et homogénéise simultanément la boisson pétillante en cours de formation dans la bouteille.

Dans une autre variante de la bouteille selon l'invention, la fixation de l'obturateur au corps de bouteille ne provoque pas systématiquement le perçage de la cartouche par le perforateur. L'obturateur présente une zone déformable qui, par déformation, repousse le perforateur et/ou la cartouche l'un vers l'autre de manière que le perforateur perce alors la cartouche et libère le gaz.

Dans une forme de réalisation particulière de la bouteille selon l'invention, la pastille contenant l'additif comestible hydrosoluble est calée entre, d'une part, une bague périphérique du corps de la bouteille et, d'autre part, un disque qui est percé d'une ouverture prolongée d'un ergot tubulaire constituant une partie au moins du perforateur précité. Dans cette forme de réalisation de l'invention, l'ergot tubulaire sert à la fois de perforateur de la cartouche de gaz et de conduit pour l'évacuation du gaz de la cartouche et son expansion dans le réceptacle où il est retenu provisoirement prisonnier par la pastille. Dans une variante avantageuse de cette forme de réalisation de la bouteille selon l'invention, le disque constitue le fond d'une coupelle contenant la pastille. Cette variante de l'invention facilite l'insertion et la disposition adéquate de la pastille dans le réceptacle.

Dans la bouteille selon l'invention, l'obturateur contenant le réceptacle peut en même temps constituer un bouchon pour le remplissage et la vidange de la bouteille. Dans cette forme de réalisation de l'invention, il convient de retourner la bouteille après l'avoir remplie d'eau et y avoir fixé le bouchon, de manière à mettre la pastille en contact avec l'eau de la bouteille. Il est évidemment nécessaire de maintenir la bouteille suffisamment longtemps dans cette position pour dissoudre la totalité de la pastille d'additif.

Dans une forme de réalisation préférée de la bouteille selon l'invention, l'obturateur constitue une partie au moins du fond de la bouteille. Dans cette forme de réalisation de la bouteille selon l'invention, l'autre extrémité du corps de bouteille inclut avantageusement un goulot qui est obturé par un bouchon qui peut être amovible.

Dans la forme de réalisation préférée qui vient d'être décrite, la fixation du fond de bouteille sur le corps de bouteille peut être indifféremment amovible ou inamovible.

L'invention permet la mise à disposition du consommateur, d'une panoplie d'éléments interchangeables en fonction de ses désidérata (pastilles de compositions distinctes ; cartouches de gaz de volumes et de pressions distinctes ; corps de bouteille de volumes distincts).

L'invention concerne dès lors également un kit d'obturation d'un corps de bouteille destinée à la préparation d'une boisson pétillante, ledit kit incluant
- un obturateur du corps de bouteille, qui est profilé en sorte de former un réceptacle,
- une cartouche de gaz sous pression, conçue pour être introduite dans le réceptacle,
- une pastille incluant un additif comestible hydrosoluble, et
- un disque qui est destiné à servir de support à la pastille, qui est percé d'une ouverture prolongée d'un ergot tubulaire et qui est conçu pour être inséré dans le réceptacle de telle manière que l'ergot se positionne en regard de la cartouche.

Les éléments constitutifs du kit selon l'invention ont été définis plus haut, en référence à la bouteille selon l'invention.

Le kit selon l'invention permet à un utilisateur de sélectionner à volonté les éléments nécessaires à la confection d'une boisson définie. Il présente l'avantage supplémentaire de permettre la réutilisation d'un corps de bouteille en y adaptant successivement plusieurs obturateurs assemblés au départ du kit. Le kit selon l'invention facilite la fabrication en série des éléments constitutifs de la bouteille selon l'invention et réduit, par voie de conséquence, son coût.

Dans une forme de réalisation particulière du kit selon l'invention, le disque constitue le fond d'une coupelle destinée à recevoir la pastille. Cette forme de réalisation du kit selon l'invention facilite l'assemblage de la bouteille en permettant un centrage optimum de la pastille sur le disque.

L'invention concerne également un procédé de fabrication d'une bouteille conforme à l'invention par assemblage d'un corps de bouteille, d'un obturateur dudit corps, d'une cartouche de gaz sous pression et d'un perforateur de la cartouche, ledit procédé se caractérisant en ce que
- on forme le corps de bouteille de manière à ménager une bague annulaire à la périphérie d'une ouverture axiale dudit corps,
- on forme l'obturateur de manière à ménager dans celui-ci un réceptacle axial prolongé par un épaulement annulaire,
- on forme un disque dont le centre est percé d'une ouverture prolongée d'un ergot tubulaire,
- on prépare une pastille incluant un additif comestible hydrosoluble,
- on introduit la cartouche de gaz dans le réceptacle,
- on dispose le disque en regard de l'épaulement annulaire de telle façon que son ergot tubulaire vienne en regard de la cartouche de gaz,
- on pose la pastille sur le disque, et
- on fixe l'obturateur sur le corps de bouteille, de manière que la pastille prenne appui sur la bague périphérique du corps de bouteille et repousse le disque contre l'épaulement annulaire de l'obturateur.

Dans une première variante du procédé selon l'invention, la fixation de l'obturateur sur le corps de la bouteille provoque le percement de la cartouche par le perforateur. Du gaz s'échappe alors de la cartouche à travers l'ergot tubulaire et est retenu temporairement prisonnier dans le réceptacle.

Dans une autre variante du procédé selon l'invention, l'ergot tubulaire se situe en regard de la cartouche, sans percer celle-ci, lorsque l'obturateur est fixé sur le corps de bouteille. Dans cette variante du procédé selon l'invention, le percement de la cartouche nécessite une action extérieure, par exemple une déformation de l'obturateur pour repousser le perforateur et/ou la cartouche l'un vers l'autre.

Dans une mise en oeuvre avantageuse du procédé selon l'invention, le disque constitue le fond d'une coupelle que l'on forme d'une pièce avec l'ergot tubulaire, par emboutissage d'un flan métallique.

L'invention concerne également un procédé pour la préparation d'une boisson pétillante, selon lequel on met en oeuvre une bouteille conforme à l'invention, telle que décrite plus haut, et on la remplit avec de l'eau.

Dans le présent mémoire, l'expression générale « eau » désigne indifféremment de l'eau non pétillante et de l'eau considérée insuffisamment pétillante par un utilisateur. De l'eau non pétillante est de l'eau dont la teneur en gaz n'excède pas la solubilité dans les conditions normales de pression et de température, de sorte qu'elle ne bouillonne pas lorsqu'elle se trouve dans de telles conditions normales. De l'eau insuffisamment pétillante est de l'eau pétillante dans le sens défini plus haut, mais dont le bouillonnement, lorsqu'elle se trouve dans les conditions normales de pression et de température, est estimé insuffisant par un utilisateur.

Le procédé selon l'invention pour la préparation d'une boisson pétillante est avantageusement mis en oeuvre dans une bouteille obtenue au moyen du procédé de fabrication selon l'invention, décrit plus haut.

### Brève description des figures

Les aspects exposés plus haut de l'invention, ainsi que d'autres aspects de celle-ci seront clarifiés dans la description détaillée de quelques modes de réalisation particuliers de l'invention, référence étant faite aux dessins des figures, dans lesquelles :

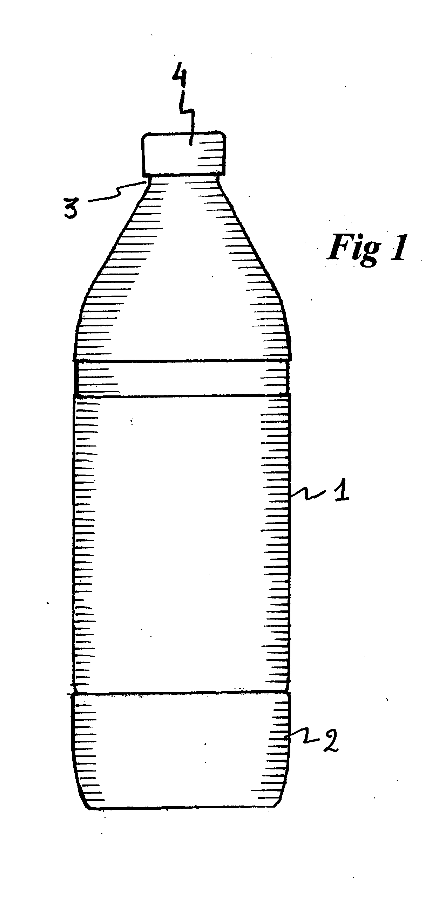

La figure 1 est une vue partielle en élévation d'une forme de réalisation particulière de la bouteille selon l'invention.
La figure 2 est une vue éclatée, en section axiale, du fond de la bouteille de la figure 1.
Les figures 3a et 3b montrent en perspective cavalière respectivement vue d'en haut et d'en bas et à grande échelle, un détail de la figure 1.
La figure 4 montre en section axiale, le fond de la bouteille de la figure 1, prête à l'emploi.

Les figures ne sont pas dessinées à l'échelle. Généralement, des éléments semblables sont dénotés par des références semblables dans les figures.

### Description détaillée de modes de réalisation particuliers

La bouteille représentée aux figures comprend un corps 1 qui est fixé sur un fond 2 et qui est prolongé, à sa partie supérieure, par un goulot 3 obturé par un bouchon amovible 4.

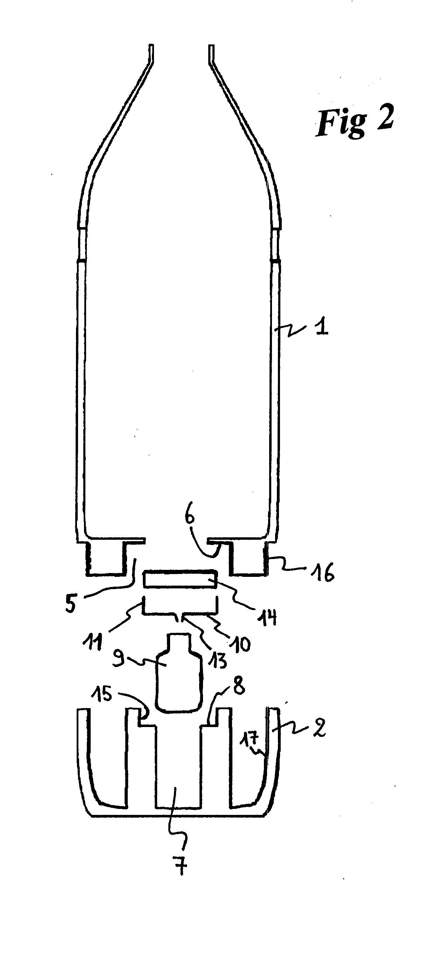

Le corps 1 est par exemple en polyéthylène et obtenu par moulage ou soufflage. Le fond 2 constitue un obturateur du corps de bouteille. Il est également en matière plastique et est obtenu par moulage. Pour assurer sa fixation amovible sur le corps de bouteille 1, le fond 2 présente une zone périphérique taraudée 16, qui coopère avec une zone filetée correspondante 17 du corps de bouteille 1 (figure 2). L'étanchéité de l'assemblage est assurée par un joint torique (non représenté) en élastomère.

A sa partie inférieure, le corps 1 présente une ouverture axiale circulaire 5 entourée d'une bague périphérique annulaire 6.

Le fond 2 et les éléments qu'il contient (dont la description va suivre) constitue un kit d'obturation du corps de bouteille 1.

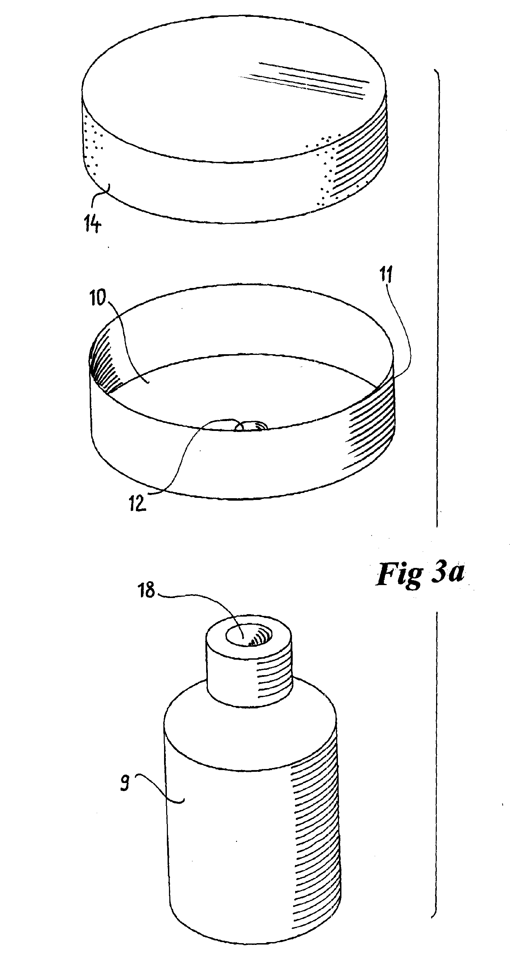

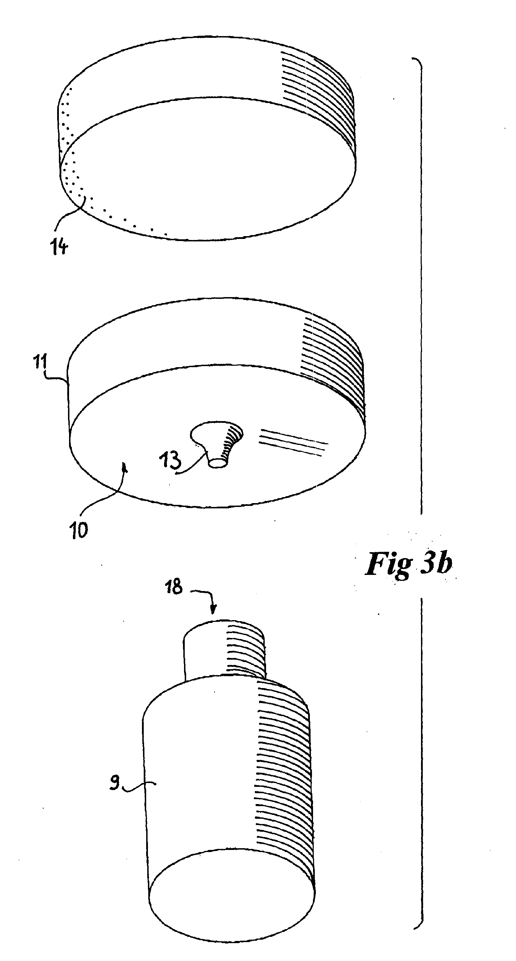

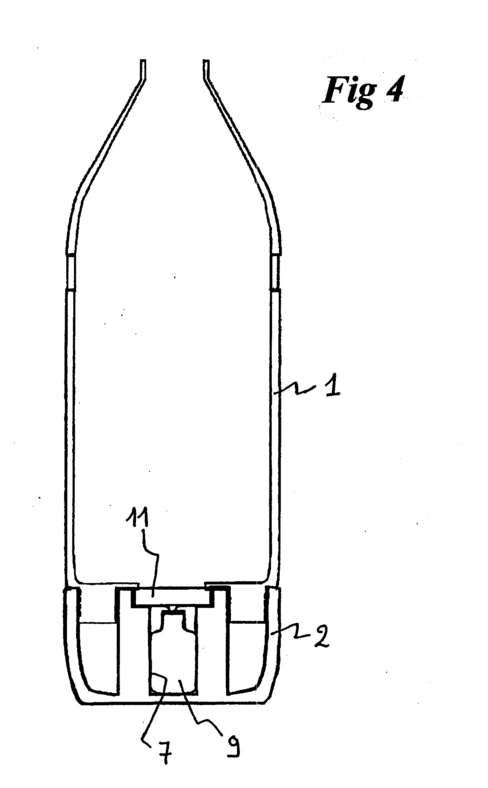

Le kit d'obturation de la bouteille, visible de manière détaillée aux figures 2, 3a, 3b et 4 comprend le fond 2, une cartouche 9 contenant un gaz sous pression (généralement du dioxyde de carbone), une coupelle métallique 11 et une pastille cylindrique 14 obtenue par compactage d'une poudre incluant un additif comestible et hydrosoluble. L'additif comestible peut par exemple comprendre un extrait de plante, ou un médicament (par exemple de l'acide acétylsalicylique). En variante, il peut inclure une substance effervescente, par exemple un mélange de bicarbonate de sodium et d'acide citrique ou de citrate de sodium ou de magnésium.

Le fond 2 délimite un réceptacle axial cylindrique 7 prolongé à sa partie supérieure, par un épaulement annulaire 8 entouré d'une paroi annulaire verticale 15.

Le réceptacle 7 est conçu pour contenir la cartouche de gaz 9. Celle-ci est par exemple en acier et elle est obturée, à son extrémité supérieure, par une capsule métallique circulaire 18 soudée à sa paroi.

La coupelle 11 est destinée à recevoir la pastille cylindrique 14 et à être insérée dans l'encoche délimitée entre l'épaulement 8 et la paroi annulaire 15. Le disque 10 formant le fond de la coupelle 11 est percé en son centre d'une ouverture 12 prolongée d'un ergot tubulaire 13. La coupelle 11 et son ergot tubulaire sont par exemple en aluminium et peuvent dans ce cas être formés d'une pièce par emboutissage d'un flan métallique.

Pour fabriquer la bouteille représentée aux figures, on introduit la cartouche 9 dans le réceptacle 7 du fond 2, on introduit la pastille 14 dans la coupelle 11 et on engage celle-ci dans l'encoche qui est délimitée entre la paroi circulaire 15 et l'épaulement annulaire 8, de manière que l'ergot 13 se positionne au-dessus de la capsule 18 de la cartouche 9. On visse ensuite le fond 2 sur le corps de bouteille 1. Sous l'effet de la fixation du fond 2 sur le corps de bouteille 1, la pastille 14 prend appui sur la bague annulaire 6 et repousse la coupelle 11 vers le bas dont l'ergot 13 perce alors la capsule 18 de la cartouche 9. Le gaz s'échappe alors de la cartouche 9 mais est retenu dans le réceptacle 7 par la pastille 14 formant joint étanche.

Pour fabriquer une boisson pétillante, on remplit la bouteille (formée de l'assemblage du corps 1 et du fond 2) par son goulot 3, avec de l'eau (par exemple de l'eau provenant d'un réseau publique de distribution d'eau) puis on fixe le bouchon 4 de manière hermétique sur le goulot 3. La pastille 14 se dissout alors progressivement, jusqu'à ce qu'elle se brise sous l'effet de la pression du gaz dans la cartouche 9. Dès ce moment, le gaz se disperse dans l'eau, provoquant un brassage énergique de celle-ci, ce qui accélère la dissolution complète des résidus de la pastille 14 et homogénéise simultanément la boisson contenue dans la bouteille.

Dans une forme de réalisation particulière de la bouteille représentée aux figures, le corps de bouteille 1 peut être réalisé en verre ou en métal. Le fond 2 peut être en métal, l'aluminium convenant bien.

En résumé, l'invention peut être décrite comme suite : bouteille pour la préparation in situ d'une boisson pétillante, incluant un corps de bouteille (1) que l'on fixe à un obturateur (2) incluant un réceptacle (7) dans lequel on introduit une cartouche (9) de gaz sous pression, un perforateur (13) de la cartouche et une pastille (14) d'un additif comestible hydrosoluble, que l'on interpose entre la cartouche et le corps de bouteille, la fixation de l'obturateur (2) au corps de bouteille (1) ayant pour effet de placer le perforateur (13) en regard de la cartouche (9) et pouvant, dans une variante d'exécution, perforer la cartouche ce qui provoque une expansion du gaz dans le réceptacle dont l'étanchéité est assurée par la pastille.

## Revendications

1. Bouteille pour la préparation in situ d'une boisson pétillante, incluant un corps de bouteille (1) et un obturateur (2) du corps de bouteille, ledit obturateur incluant un réceptacle (7) qui contient un additif comestible hydrosoluble, une cartouche (9) de gaz sous pression et un perforateur (13) de la cartouche, **caractérisée en ce que** l'additif comestible hydrosoluble est mis en oeuvre dans une pastille (14) qui est interposée entre la cartouche (9) et le corps de bouteille (1).

2. Bouteille selon la revendication 1, **caractérisée en ce que** la pastille (14) est calée entre, d'une part une bague périphérique (6) du corps de la bouteille (1) et, d'autre part, un disque (10) qui est percé d'une ouverture (12) prolongée d'un ergot tubulaire (13) constituant une partie au moins du perforateur précité.

3. Bouteille selon la revendication 2, **caractérisée en ce que** le disque (10) constitue le fond d'une coupelle (11) contenant la pastille (14).

4. Bouteille selon l'une quelconque des revendications 1 à 3, **caractérisée en ce que** le corps de bouteille (1) inclut un goulot (3) pourvu d'un bouchon (4) et est fixé sur un fond de bouteille (2) incluant l'obturateur précité.

5. Bouteille selon la revendication 4, **caractérisée en ce que** le fond de bouteille (2) est fixé de manière amovible au corps de bouteille (1).

6. Bouteille selon l'une quelconque des revendications 1 à 5, **caractérisée en ce que** l'additif comestible hydrosoluble est sélectionné parmi les substances aromatiques olfactives, les substances aromatiques gustatives, les sels hydrosolubles d'oligo-éléments, les extraits hydrosolubles de plantes aromatiques, les substances alimentaires hydrosolubles, les substances pharmaceutiques hydrosolubles et les colorants.

7. Kit d'obturation d'un corps de bouteille destinée à la préparation d'une boisson pétillante, ledit kit incluant un obturateur (2) du corps de bouteille (1) qui est profilé en sorte de former un réceptacle (7), une cartouche (9) de gaz sous pression conçue pour être introduite dans le réceptacle (7), une pastille (14) incluant un additif comestible hydrosoluble, un disque (10) qui est destiné à servir de support à la pastille (14), qui est percé d'une ouverture (12) prolongée d'un ergot tubulaire (13) et qui est conçu pour être inséré dans le réceptacle (7) de telle manière que l'ergot (13) se positionne en regard de la cartouche (9).

8. Procédé de fabrication d'une bouteille conforme à l'une quelconque des revendications 1 à 6, par assemblage d'un corps de bouteille (1), d'un obturateur (2) dudit corps, d'une cartouche (9) de gaz sous pression et d'un perforateur (13) de la cartouche, **caractérisé en ce que** l'on forme le corps de bouteille (1) de manière à ménager une bague annulaire (6) à la périphérie d'une ouverture axiale (5) dudit corps (1), on forme l'obturateur (2) de manière à ménager dans celui-ci un réceptacle axial (7) prolongé par un épaulement annulaire (8), on forme un disque (10) dont le centre est percé d'une ouverture (12) prolongée d'un ergot tubulaire (13), on prépare une pastille (14) incluant un additif comestible hydrosoluble, on introduit la cartouche (9) de gaz dans le réceptacle (7), on dispose le disque (10) en regard de l'épaulement annulaire (8) de telle façon que son ergot tubulaire (13) vienne en regard de la cartouche de gaz (9), on pose la pastille (14) sur le disque (10), et on fixe l'obturateur (2) sur le corps de bouteille (1), de manière que la pastille prenne appui sur la bague périphérique (6) du corps de bouteille (1) et repousse le disque (10) contre l'épaulement annulaire (6) de l'obturateur.

9. Procédé selon la revendication 8, **caractérisé en ce que** le disque (10) constitue le fond d'une coupelle (11) que l'on forme d'une pièce avec l'ergot tubulaire (13), par emboutissage d'un flan métallique.

10. Procédé pour la préparation d'une boisson pétillante, selon lequel on met en oeuvre une bouteille conforme à l'une quelconque des revendications 1 à 7, que l'on remplit avec de l'eau.
